# EUROPEAN PATENT SPECIFICATION

(11) **EP 4 480 159 B1**
(45) Date of publication and mention of the grant of the patent: **28.10.2026**
(21) Application number: 23713461.4
(22) Date of filing: 21.02.2023
(51) Int. Cl.: H04L 65/403, H04L 47/11, H04L 47/431, H04L 65/752, H04L 65/75, H04L 65/80, H04L 47/24

(54) **METHOD AND APPARATUS FOR RATE CONTROL OF MEDIA STREAMS WITH SELECTABLE DISCRETE LEVELS OF QUALITY IN SELECTIVE FORWARDING UNITS**
VERFAHREN UND VORRICHTUNG ZUR RATENSTEUERUNG VON MEDIENSTRÖMEN MIT WÄHLBAREN DISKRETEN QUALITÄTSNIVEAUS IN SELEKTIVEN WEITERLEITUNGSEINHEITEN
PROCÉDÉ ET APPAREIL DE COMMANDE DE DÉBIT DE FLUX MULTIMÉDIAS AVEC DES NIVEAUX DISCRETS SÉLECTIONNABLES DE QUALITÉ DANS DES UNITÉS DE TRANSFERT SÉLECTIF

(30) Priority: 18.02.2022 US 202263311686 P
(43) Date of publication of application: 25.12.2024
(73) Proprietor: Vonage Business Inc., Holmdel, New Jersey 07733 (US)
(72) Inventor: ALVAREZ-CORTES, Sara, 08010 Barcelona Barcelona (ES); BERSIER, Andres, 08037 Barcelona Barcelona (ES); DIVORRA-ESCODA, Oscar, 08029 Barcelona Barcelona (ES); PATRICIELLO, Natale, 08019 Barcelona Barcelona (ES); XHAGJIKA, Vamis, 08010 Barcelona Barcelona (ES)
(74) Representative: AWA Sweden AB
(86) International application number: PCT/US2023/013464
(87) International publication number: WO 2023/158864

(56) References cited:
- US-A1- 2010 121 974

## Description

### BACKGROUND

### Field

Embodiments of the present principles generally relate to bandwidth estimations/rate control of media streams in communication systems and more specifically to a method and apparatus for bandwidth estimations/rate control of media streams using multiple, combined probing techniques.

### Description of the Related Art

Current audio and video conferencing systems include a Selective Forwarding Unit (SFU), which receives and forwards audio and video streams from and to each participant of the conferencing system via separate outgoing channels, or streams, for each client. In other words, in group calls, any sender (or publisher) will transmit data to the SFU to use it as a relay and/or data forwarding service to get the data to reach each of the receivers (or subscribers). The SFU should avoid congesting the subscribers' receiving channel with too much data, or the additional packet latency (and/or loss) may destroy the user experience.

In some instance, an SFU does not modify the stream that the SFU receives from the publisher and just forwards the stream to each of the subscribers. An SFU has to receive a stream from the publisher with a low enough bitrate to fit the available bandwidth between the SFU and an intended subscriber. In some instances, to ensure a low enough bitrate, a publisher is notified regarding a maximum allowed bitrate, which corresponds to a lowest of the bandwidth estimations between the publisher and the SFU connection and each connection between the SFU and a subscriber. However, such methods do not scale well for many participants since it takes only one subscriber having a poor internet connection to degrade a communication experience for all the subscribers.

Another option is for the publisher to send multiple streams with different qualities, or a multi-quality stream (which can be decomposed in different qualities), and/or a combination of both, for the SFU to forward the stream with the highest bitrate possible, but below the available bandwidth to each subscriber.

Conventionally, for achieving "rate-control" multiple factors must be taken into account, including but not limited to, the variability of the connection or the congestion events caused by concurrent flows in that connection. A typical process begins by setting a minimum bitrate, and then increasing the bitrate based until a data stream displays signs of problems (e.g., congestion), at which point a rollback is attempted. Once the problems are resolved, the bitrate can start to increase again, in an adaptive loop that tries to constantly and carefully adjust how much data is communicated to a subscriber.

Existing bandwidth estimation strategies are classified into two groups: receiver-side and sender-side. In their most basic form, both groups operate between two single end-points, i.e., these are not designed at the base as multiparty congestion control algorithms. In the first group, the subscriber communicates back to the sender its estimated bandwidth through a limitation message, e.g., the Receiver Estimated Maximum Bitrate (REMB), taking into account the received data stream and its properties (including, but not limited to, incoming rate, packet loss, latencies, jitter). In the second group, it is the sender that estimates the bandwidth by using the receiver's feedback for adjusting the rate.

A common method for evaluating the available bandwidth of the receiver's channel includes probing the network's capacity, within a short period of time, by sending data at a much faster rate than a current target rate. By keeping the probing time low, the sender reduces the adversarial effects produced of that increased amount of data traffic on a congested or small channel, and by using non-useful data (often by means of accessory, non-decodable, data stuffing, also called padding data) the probing period has no impact on the user data stream. There are two typical ways of probing the channel. The first probing technique, referred to as non-paced probing, effective with receiver-side rate control and sometimes in combination with multiple quality data (e.g. video simulcast and temporal scalability), includes sending a combination of at least one of padding attached to each data packet and a burst of probing packets at once, increasing the subscriber's incoming rate in a sustainable manner, after or before a data packet. Non-paced probing, as defined, in the context of an SFU, and used in combination with multi-quality data, provides the capacity to help discover the available bandwidth to enable applying rate-control algorithms in subscriber connections and allows an SFU, based on the discovered bandwidth, to select the best data quality to forward to each subscriber from multi-quality data received by the SFU from a publisher. It is a common requirement in many implementations, that the burst of padding at once, must be after a so-called marker packet.

The second probing technique, referred to as paced probing, more suited for sender-side rate control, and especially in combination with encoders that can adjust bitrate in fine steps, includes pacing each probing packet (or each group of probing packets) by some value, to have more information about the channel timings given the packet reception timestamps that come along with the receiver's feedback. By increasing the quantity of the data points collected by the sender, assuming that the probe is successfully executed, the bandwidth estimation can be more accurate. When relying only on network probing alone, however, in the case a probe fails by being lost or not correctly received by the subscriber, the sender estimation may be inaccurate.

Current probing strategies, however, encounter several issues. In some instances a probe fails, or a probe is not executed correctly, or a probe is misconfigured for a value that is under the real channel capacity, or rate-control is not stable enough due to streamed data that has a limited set of streamable qualities/bitrates different enough from estimated available bandwidth and between paced probing points. That is, there is currently a lack of a probing method, or a probing strategy, that works at least when subscribers with different rate control strategies join the same communication.
Document US2010/121974 A1 discloses a method for providing adaptive streaming of multimedia data from a streaming server to a client terminal over a packet communication link where streaming data are transmitted from a server to a client using a first bitrate.

### SUMMARY

Methods and apparatuses for bandwidth estimations/rate control of media streams using multiple, combined probing techniques are provided herein.

In some embodiments a method for rate control of media streams using multiple, combined probing techniques includes receiving a multi-quality data stream, adding padding packets to the multi-quality data stream to determine which data stream of the multi-quality data stream to select to communicate data packets of the multi-quality data stream, adding probing packets to the selected data stream of the multi-quality data stream to determine a bandwidth at which to communicate the selected data stream, and communicating the selected data stream to receivers using the determined bandwidth.

In some embodiments, the method can further include at least one of determining, using feedback information from a communication network, whether or not a different quality data stream of the multi-quality data stream should be selected before adding padding packets to the multi-quality data stream, or determining, using feedback information from the communication network, if a bandwidth estimation process should be performed before adding probing packets to the selected data stream of the multi-quality data.

In some embodiments of the present principles, the feedback information from the communication network can include Real-Time Transport Protocol (RTP) data received from at least one of a sender or a receiver of the multi-quality data stream.

In some embodiments, the method can further include performing a sanity check of the selected data stream before communicating the selected data stream to receivers using the determined bandwidth.

In some embodiments, the method can further include condensing the probing packets added to the selected data stream of the multi-quality data stream with probing packets previously scheduled to be added to the selected data stream into a single burst before communicating the selected data stream to receivers.

In some embodiments, in the method a last padding packet has to be added to the multi-quality data stream before a probing packet can be added.

In some embodiments an apparatus for rate control of media streams using multiple, combined probing techniques includes a forwarding engine configured to receive a multi-quality data stream, a padding adder module configure to add padding packets to the multi-quality data stream to determine which data stream of the multi-quality data stream to select to communicate data packets of the multi-quality data stream, a probing manager module configured to add probing packets to the selected data stream of the multi-quality data stream to determine a bandwidth at which to communicate the selected data stream, and a sending engine configured to communicate the selected data stream to receivers using the determined bandwidth.

In some embodiments of the present principles, the apparatus further includes a rate control module and the padding adder module is further configure to determine, using feedback information from the rate control module, whether or not a different quality data stream of the multi-quality data stream should be selected before adding padding packets to the multi-quality data stream.

In some embodiments of the present principles, the apparatus further includes a rate control module and the probing manager module is further configure to determine, using feedback information from the rate control module, if a bandwidth estimation process should be performed before adding probing packets to the selected data stream of the multi-quality data. In some embodiments the feedback information from the rate control module includes Real-Time Transport Protocol (RTP) data received from at least one of a sender or a receiver of the multi-quality data stream.

In some embodiments, the forwarding engine is further configured to perform a sanity check of the selected data stream having the added probing packets before communicating the selected data stream to receivers using the determined bandwidth.

In some embodiments, the probing manager module is further configure to condense the probing packets added to the selected data stream of the multi-quality data stream with probing packets previously scheduled to be added to the selected data stream into a single burst before the selected data stream is communicated to receivers.

In some embodiments, in the apparatus a last padding packet has to be added to the multi-quality data stream before a probing packet can be added.

In some embodiments, an apparatus for rate control of media streams using multiple, combined probing techniques includes a processor and a memory coupled to the processor, the memory having stored therein at least one of programs or instructions executable by the processor. In such embodiments, the apparatus, upon execution of the programs or instructions, is configured to receive a multi-quality data stream, add padding packets to the multi-quality data stream to determine which data stream of the multi-quality data stream to select to communicate data packets of the multi-quality data stream, add probing packets to the selected data stream of the multi-quality data stream to determine a bandwidth at which to communicate the selected data stream, and communicate the selected data stream to receivers using the determined bandwidth.

In some embodiments, the apparatus is further configured to determine, using feedback information from a communication network, whether or not a different quality data stream of the multi-quality data stream should be selected before adding padding packets to the multi-quality data stream.

In some embodiments, the apparatus is further configured to determine, using feedback information from a communication network, if a bandwidth estimation process should be performed before adding probing packets to the selected data stream of the multi-quality data. In some embodiments, the feedback information from the communication network includes Real-Time Transport Protocol (RTP) data received from at least one of a sender or a receiver of the multi-quality data stream.

In some embodiments, the apparatus is further configured to perform a sanity check of the selected data stream before communicating the selected data stream to receivers using the determined bandwidth.

In some embodiments, the apparatus is further configured to condense the probing packets added to the selected data stream of the multi-quality data stream with probing packets previously scheduled to be added to the selected data stream into a single burst before communicating the selected data stream to receivers.

In some embodiments, in the apparatus a last padding packet has to be added to the multi-quality data stream before a probing packet can be added.

Other and further embodiments of the present principles are described below.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
Figure 1 depicts a high-level block diagram of a selective forwarding unit (SFU) in accordance with an embodiment of the present principles.
Figure 2 depicts a flow diagram of a method of the probing manager module when an incoming RTP packet is a marker packet in accordance with an embodiment of the present principles.
Figure 3 depicts a flow diagram of a method of the probing manager module during which a bandwidth probing has been triggered by, for example, the rate control module, and a received RTP packet is non-marker packet of a multi-quality data stream in accordance with an embodiment of the present principles.
Figure 4 depicts a graphical representation of the functionality of a padding adder module and a probing manager module in accordance with an embodiment of the present principles.
Figure 5 depicts a flow diagram of a method for bandwidth/rate control of media streams using multiple, combined probing techniques in accordance with an embodiment of the present principles.
Figure 6 depicts a high-level block diagram of a computer system that can be used to implement an SFU of the present principles and the methods of at least Figures 2, 3 and 5 in accordance with an embodiment of the present principles.

To facilitate understanding, identical reference numerals have been used, where possible, to designate identical elements that are common to the figures. The figures are not drawn to scale and may be simplified for clarity. It is contemplated that elements and features of one embodiment may be beneficially incorporated in other embodiments without further recitation.

### DETAILED DESCRIPTION

Embodiments of the present principles generally relate to methods, apparatuses and systems for bandwidth estimations/rate control of media streams using multiple, combined probing techniques. While the concepts of the present principles are susceptible to various modifications and alternative forms, specific embodiments thereof are shown by way of example in the drawings and are described in detail below. It should be understood that there is no intent to limit the concepts of the present principles to the particular forms disclosed. On the contrary, the intent is to cover all modifications, equivalents, and alternatives consistent with the present principles and the appended claims. For example, although embodiments of the present principles will be described primarily with respect to specific media/data streams and specific numbers of publishers and subscribers, such teachings should not be considered limiting. Embodiments in accordance with the present principles can be applied to other similar data including any number of publishers and subscribers.

In the following description, the term selective forwarding unit (SFU) is used to describe and refer to an apparatus that selectively forwards media packets from a source (referred to as publisher or sender) to a receiver (referred to as subscriber or receiver) and performs as a media router.

In embodiments described herein, the term padding is used to describe and refer to bits or characters that fill up unused portions of a data structure, such as a field, packet or frame. In some embodiments, padding can be added at the end of a data structure. In some embodiments, padding can consist of 1 bits, blank characters, and/or null characters.

In the following description, the terms stream, data stream, media stream, and the like, are used interchangeably and are intended to refer to and describe data for which rate control can be determined using sender-side techniques in accordance with the present principles.

Embodiments of the present principles provide bandwidth estimation/rate control in communication systems including an SFU to improve the overall communication quality. In some embodiments of the present principles, both paced and non-paced probing techniques are implemented together to improve the efficiency of the bandwidth estimation discovery between an SFU and a subscriber. The appropriate combination of paced and non-paced probing allows an SFU to support different rate-control strategies, as well as recover faster in case temporary problems on the network impede the correct execution of either one of the probing techniques.

More specifically, when using receiver-side or sender-side strategies, the estimated bandwidth and the reliability of the estimation are a function of, among other things, the transmitted rate. Therefore, using a combination of paced and non-paced probing techniques in accordance with the present principles, is especially useful under certain conditions, for example, to efficiently switch between data stream qualities when the SFU is processing a simulcast/scalable stream. For example, in instances in which a channel with a real bandwidth is well above the real-time communications requirements, if the publisher is sending n qualities, each with a rate in bits-per-seconds (bps) ri (with 0 <= i < n, and ri < rj for i < j) and if the SFU is sending quality i at its rate ri and the receiver (based on such information) estimates the channel bandwidth as b (in bps) such as ri < b < rj (with i < j), the SFU will be unable to switch to the higher quality rj, despite the optimal channel unless the SFU pads the stream with padding data until the value rj is reached in accordance with embodiments of the present principles.

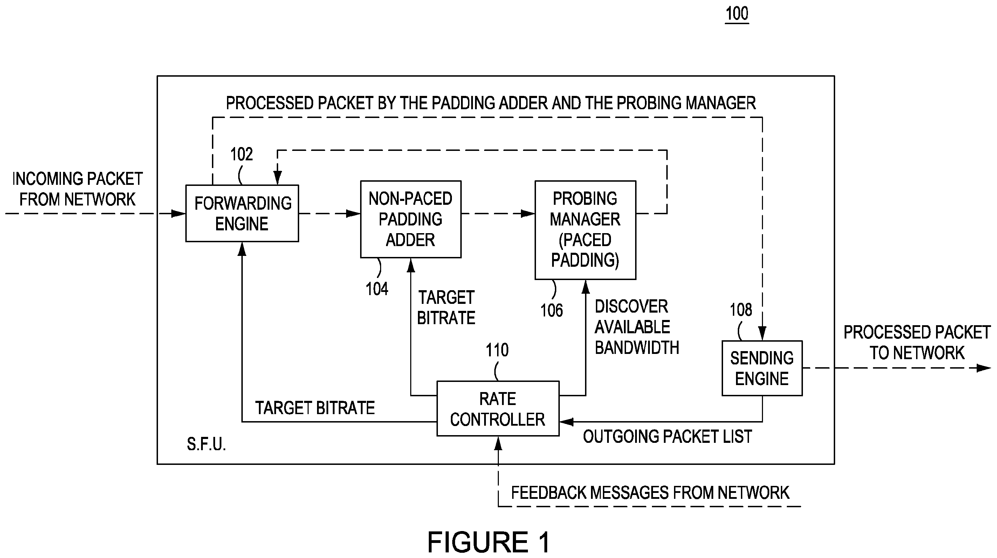

Figure 1 depicts a high-level block diagram of a selective forwarding unit (SFU) in accordance with an embodiment of the present principles. The SFU 100 of Figure 1 illustratively comprises a forwarding engine 102, a non-paced (padding adder) module 104, a paced (probing manager) module 106, a sending engine 108 and a rate control module 110.

In the embodiment of Figure 1, the forwarding engine 102 receives incoming data packets (e.g., data stream) from a network (e.g., a publisher - not shown) and decides if such packet should be forwarded or should be dropped based on, for example, network parameters, such as bandwidth estimations of subscribers. In the embodiment of Figure 1, the forwarded packets from the forwarding engine 102 are received by the padding adder module 104. The padding adder module 104 decides whether or not it is necessary to add padding to a received packet in order to reach a target rate, or if the incoming data stream with the addition of the ongoing padding bitrate is enough to trigger bandwidth adjustments by the rate control module. For example, in some embodiments, the padding adder module 104 can inject padding in data streams communicated to at least one subscriber until a communicated bitrate (e.g., padding plus the video stream bitrate) reaches a target bitrate₃

In addition, the padding adder module 104 can decide to probe more bandwidth by adding only-padding packets (also referred to as probing packets) to received packets sent all together in a burst. That is, as depicted in the embodiment of the SFU 100 of Figure 1, received packets are processed by the padding adder module 104 according to a target bitrate provided by the rate control module 110. The processed packets from the padding adder module 104 can be communicated to the probing manager module 106, which manages and executes a paced probing technique of the present principles. That is, in sender-side rate control techniques, a feedback received by, for example, the rate control module 110 from the network can include a list of the packet sequence numbers and their arrival times. In some embodiments, it is more convenient to separate packets (or a group of packets) to gather more latency information about the channel. Using the feedback received from the network, the rate control module 100 can trigger the probing manager module 106 of the SFU 100 of Figure 1 to execute a paced probing (which is a probe for bandwidth such as the one generated by the Padding Adder, but with padding packets paced out by some value to trigger a delay feedback by a respective subscriber) once a marker or a non-marker RTP packet arrives at the SFU 100 before being forwarded to the Sending Engine 108 of the SFU 100, which forwards the processed packets to an intended subscriber (not shown).

In some instances, the rate control module 110 of the SFU 100 of Figure 1 determines from the network feedback data that no paced probing by the probing manager module 106 is necessary. In such instances, no processing of the packets is performed by the probing manager module 106. On the other hand, if the rate control module 110 determines, for example using the feedback data from the network, that bandwidth probing using the probing manager module 106 is necessary, a probing manage module 106 can exist in at least the following two states: 1) the probing manager module 106 is not currently performing probing; and 2) the probing manager module 106 is currently performing probing , in which a) probing packets are scheduled (the padding packets are ready for transmission but not sent yet); and b) probing has started (the padding packets are ready for transmission, and some of the packets have already been sent).

The flow logic for the above-described two instances is different in instances in which an RTP packet is a marker or a non-marker. For example, in the case of a marker packet without ongoing probes (state 1), the probing manager module 106 computes and configures the number of probes to generate, their size, and the payload type based on the probing properties coming from the rate control module 110. Once the probes are created, the probing manager module 106 can schedule the packets to be forwarded by the forwarding engine 102 to, for example, the sending engine 108.

In the case of a marker packet but with ongoing probes, two additional substates exist. In a first substate, a previously scheduled batch is canceled and treated as a new request from the rate control module 110. The flow is then the same as in state 1 in which the probing manager module 106 computes and configures the number of probes to generate, their size, and the payload type based on the probing properties coming from the rate control module 110. Once the probes are created, the probing manager module 106 can schedule the packets to be forwarded by the forwarding engine 102 to, for example, the sending engine 108.

In the case in which some padding packets have already been sent, the remaining packets are condensed in a single burst and sent out all at once before forwarding the RTP packet. This maintains the expected padding flow from a subscriber's perspective but loses the paced property, effectively functioning as a non-paced padding.

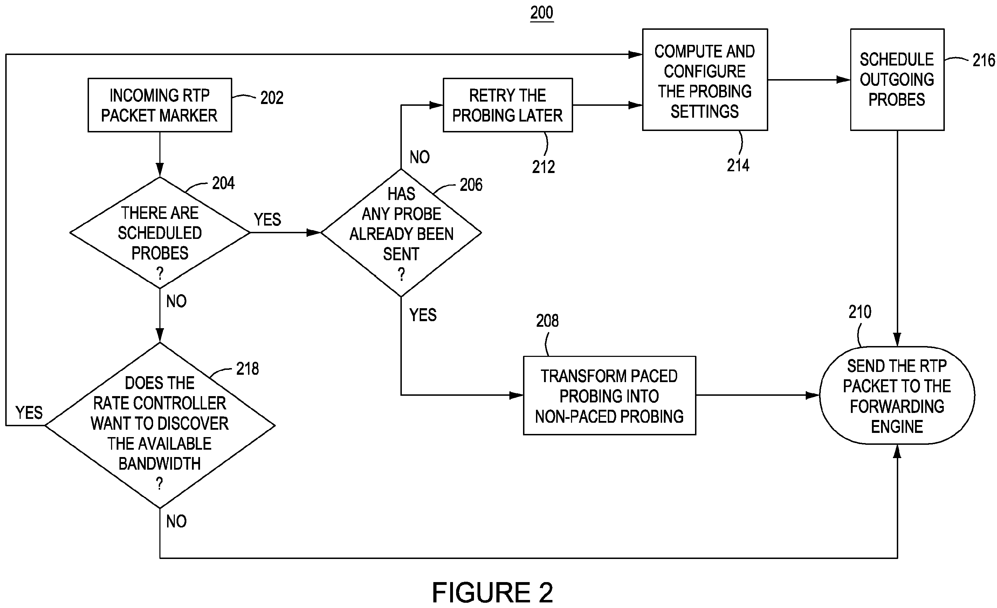

Figure 2 depicts a flow diagram of a method 200 of the probing manager module 106 when an incoming RTP packet is a marker packet in accordance with an embodiment of the present principles. The method 200 can begin at 202 during which RTP marker packets of a multi-quality data stream are received. The method 200 can proceed to 204.

At 204, it is determined whether probing packets are scheduled in the probing manager module 106. If there are probing packets scheduled, the method 200 continues to 206. If there are no probing packets scheduled, the method 200 can skip to 218.

At 206, it is determined if any scheduled probe packets have already been sent. If probe packets have been sent the method 200 proceeds to 208. If probe packets have not been sent the method 200 skips to 212.

At 208, the probing manager module 106 transforms paced probing into non-paced probing. That is, in some embodiments and as described above, at 208 packets are condensed into a single burst to be sent out all at once This maintains the expected padding flow from a subscriber's perspective but loses the paced property, effectively functioning as a non-paced padding. The method 200 can proceed to 210.

At 210, RTP packets, including the probing packets, are communicated to the forwarding engine 102, which can communicate the RTP packets to the sending engine 108. The method 200 can then be exited.

At 212, if scheduled probe packets have not been sent, the probing is delayed and not performed. The method 200 can proceed to 214.

At 214, probe settings are determined and configured. That is, in some embodiments and as described above, the probing manager module 106 computes and configures the number of probes to generate, their size, and the payload type based on the probing properties coming from the rate control module 110. The method 200 can proceed to 216.

At 216, probing packets are scheduled for transmission. The method 200 can then revert back to 210 at which RTP packets, including the probing packets, are communicated to the forwarding engine 102, which can communicate the RTP packets to the sending engine 108. The method 200 can then be exited.

At 218, it is determined if the rate control module 110 has determined, using for example feedback from the network, whether or not an available bandwidth (e.g., bandwidth estimation) should be determined. If it has been determined that available bandwidth should not be determined, the method can revert back to 210, at which RTP packets are communicated to the forwarding engine 102, which can communicate the RTP packets to the sending engine 108. The method 200 can then be exited.. If it is determined that available bandwidth should be determined, the method can revert back to 214 at which probe settings are determined and configured using the probing manager module 106, which computes and configures the number of probes to generate, their size, and the payload type based on the probing properties coming from the rate control module 110. The method can then proceed to 216 at which the probing packets are scheduled for transmission. The method can then revert back to 210 at which RTP packets are communicated to the forwarding engine 102, which can communicate the RTP packets to the sending engine 108. The method 200 can then be exited.

In embodiments of the present principles in which a bandwidth probing has been triggered by, for example, the rate control module 110, and the RTP packet is non-marker, there again exists two cases. In the first case, in which there is no ongoing probing by, for example the probing manager module 106, and the probing manager module 106 cannot start or schedule the probing process, as it happens after a marker packet is received, the RTP non-marker packet is then forwarded, and the ongoing processing stops. In the second case, in which there is an ongoing probing process (it does not matter if scheduled or started), the probing manager module 106 condenses the generated padding packets in a single burst which is sent out all at once before forwarding the RTP packet.

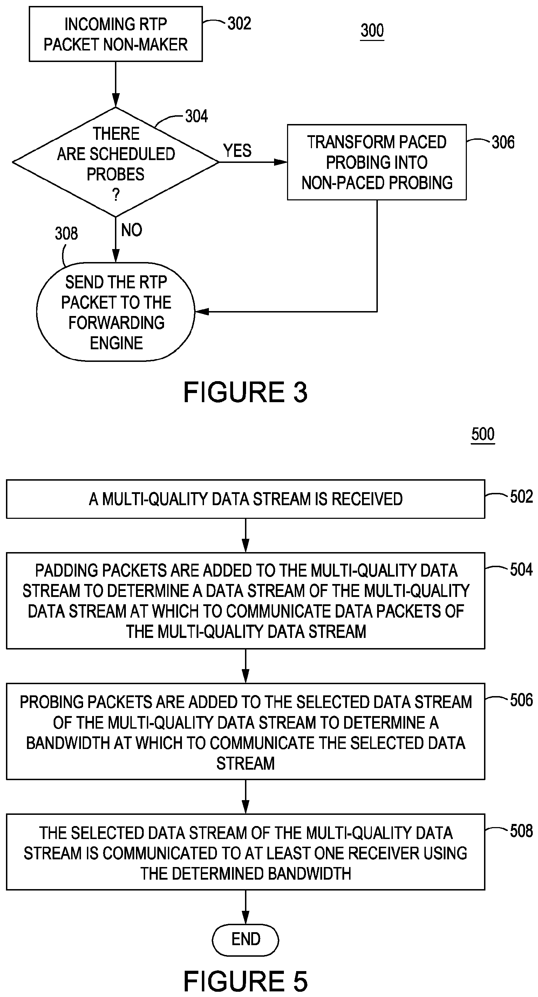

Figure 3 depicts a flow diagram of a method 300 of the probing manager module 106 during which a bandwidth probing has been triggered by, for example, the rate control module 110, and a received RTP packet is non-marker packet of a multi-quality data stream in accordance with an embodiment of the present principles. The method 300 can begin at 302 during which RTP non-marker packets are received. The method 300 can proceed to 304.

At 304, it is determined whether or not scheduled probing packets exist. If probing packets exist, the method 300 can proceed to 306. If probing packets do not exist, the method 300 can skip to 308.

At 306, the probing manager module 106 transforms paced probing into non-paced probing. That is, in some embodiments and as described above, at 306 packets are condensed into a single burst to be sent out all at once This maintains the expected padding flow from a subscriber's perspective but loses the paced property, effectively functioning as a non-paced padding. The method 300 can proceed to 308.

At 308, RTP packets, including any probing packets, are communicated to the forwarding engine 102, which can communicate the RTP packets to the sending engine 108. The method 300 can then be exited.

Referring back to Figure 1, in either of the cases illustrated by the method 200 of Figure 2 and the method 300 of Figure 3, the packet(s) generated by the Padding Adder and/or the Probing Manager can be passed through the Forwarding Engine 102 for sanity checks before being transmitted out by the Sending Engine 108. In some embodiments, each component of the SFU does not process packets that the component has generated to avoid loops.

The Padding Adder and the Probing Manager of the present principles have to select the right timing to send out padding data carefully. The standard specification defines non-markers (a packet within a frame) and markers (the last packet of a frame) data packets, and many implementations demand that padding data must follow marker packets but cannot be sent in between non-marker packets. There is no theoretical limit on the amount of padding that can be sent, but as an SFU of the present principles can only forward packets without storing or modifying them, if the Probing Manager detects a non-marker packet that is about to be forwarded in the middle of a paced probing procedure, such a procedure should be stopped.

In embodiments of an SFU of the present principles, such as the SFU 100 of Figure 1, the presence of the Padding Adder 104 in accordance with the present principles enables for a quick recovery, or a quicker quality switch, in case a paced-probe is not executed correctly, a paced-probe fails, or the paced-probe is executed correctly but includes a bandwidth value lesser than the real channel capacity. Such benefits are possible due to the additional, more sustained, delay feedback data generated by the padding packets in accordance with the present principles, which increases the data point set from which is generated the target data rate. The non-paced padding of the present principles acts as a more sustained bitrate stuffing transmitted along with actual data to virtually enforce a bigger bitrate streamed than the actual data carries.

Embodiments of the present principles, support receivers that work with receiver- side and/or sender-side rate control at the same time, by, in some embodiments, disabling the Probing Manager for receiver-side only subscribers. As depicted in Figure 2 and Figure 3, if any probing (paced or not) is ongoing, the probing is communicated on the channel (flushed) to avoid any interaction between probings. Moreover, if there is a sustained non-paced probing, the Probing Manager will never set up a paced probing: in this way, compatibility is maintained with old clients without support for sender-side rate control, in the same or different sessions.

Is should be noted that, a rate control module of the present principles, such as the rate control module 110 of Figure 1, should have access to precise timing information provided by a sending engine of the present principles, such as the sending engine 108 of Figure 1, for estimating the network's current state and adjusting the estimation accordingly, keeping track also of the injected padding rate.

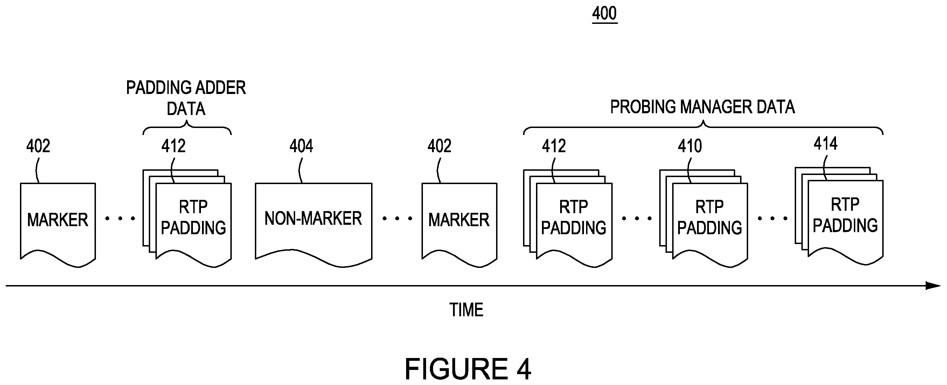

Figure 4 depicts a graphical representation 400 of the functionality of a padding adder module and a probing manager module of the present principles, such as the padding adder module 104 and the probing manager module 106 of the SFU 100 of Figure 1, in accordance with an embodiment of the present principles. In the embodiment of Figure 4, a padding adder module of the present principles (not shown) adds padding packets 405 (illustratively RTP padding packets) to a multi-quality data stream in between a first marker packet 402 and a first non-marker packet 404. As further depicted in Figure 4, a probing manager module of the present principles (not shown) adds a burst of probing/padding packets 410 (illustratively RTP padding packets) to the multi-quality data stream in between a second marker packet 412 and a second non-marker packet 414. In accordance with the present principles and depicted in the embodiment of Figure 4, the padding adder module and the probing manager module of the present principles can add and send RTP padding at different times to assess available bandwidth and to help to switch qualities if needed. In the embodiment of Figure 4, the padding adder module first adds some padding data to help to switch qualities and then the probing manager module initiates a paced probe to assess if there is additional bandwidth available.

Figure 5 depicts a flow diagram of a method 500 for bandwidth/rate control of media streams using multiple, combined probing techniques in accordance with an embodiment of the present principles. The method 500 can begin at 502 during a multi-quality data stream is received. The method 500 can proceed to 504.

At 504, padding packets are added to the multi-quality data stream to determine a data stream of the multi-quality data stream at which to communicate data packets of the multi-quality data stream. The method 500 can proceed to 506.

At 506, probing packets are added to the selected data stream of the multi-quality data stream to determine a bandwidth at which to communicate the selected data stream. The method 500 can proceed to 508.

At 508, the selected data stream of the multi-quality data stream is communicated to, for example at least one subscriber, using the determined bandwidth. The method 500 can then be exited.

In some embodiments of the present principles, the method 500 can further include 503, at which it is determined whether or not a different quality data stream of the multi-quality data stream should be selected. If at 503 it is determined that a different quality data stream of the multi-quality data stream should be selected, the method 500 can proceed to 504.

If at 503 it is determined that a different quality data stream of the multi-quality data stream should not be selected, the method 500 can proceed to a further included 505 during which it is determined if a bandwidth estimation process should be performed. If at 505 it is determined that a bandwidth estimation process should be performed, the method 500 can proceed to 506.

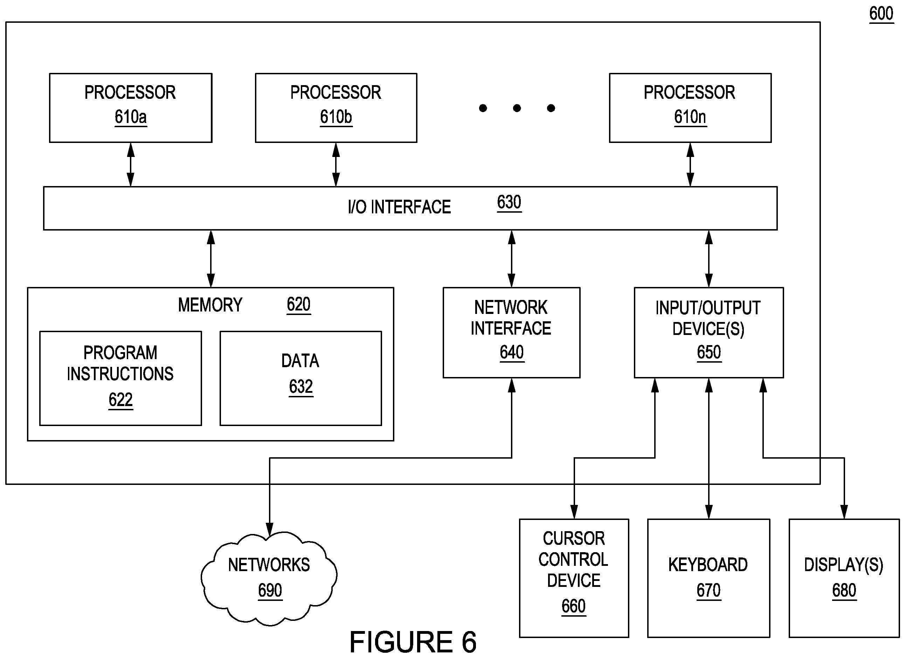

Figure 6 depicts a high-level block diagram of a computer system that can be used to implement an SFU of the present principles and the methods of Figures 2, 3 and 5 in accordance with an embodiment of the present principles. That is, various embodiments of a method, apparatus and system for determining a padding boosting budget, as described herein, may be executed on one or more computer systems, which may interact with various other devices. One such computer system is computer system 600 illustrated by Figure 6, which may in various embodiments implement any of the elements or functionality illustrated in Figures 2, 3, and 5. That is, in various embodiments, computer system 600 may be configured to implement methods described above. The computer system 600 may be used to implement any other system, device, element, functionality or method of the above-described embodiments. In the illustrated embodiments, computer system 600 may be configured to implement method 300, as processor-executable executable program instructions 622 (e.g., program instructions executable by processor(s) 610) in various embodiments.

In the illustrated embodiment, computer system 600 includes one or more processors 610 coupled to a system memory 620 via an input/output (I/O) interface 630. Computer system 600 further includes a network interface 640 coupled to I/O interface 630, and one or more input/output devices 650, such as cursor control device 660, keyboard 670, and display(s) 680. In various embodiments, any of components may be utilized by the system to receive user input described above. In various embodiments, a user interface (e.g., user interface 630) may be generated and displayed on display 680. In some cases, it is contemplated that embodiments may be implemented using a single instance of computer system 600, while in other embodiments multiple such systems, or multiple nodes making up computer system 600, may be configured to host different portions or instances of various embodiments. For example, in one embodiment some elements may be implemented via one or more nodes of computer system 600 that are distinct from those nodes implementing other elements. In another example, multiple nodes may implement computer system 600 in a distributed manner.

In different embodiments, computer system 600 may be any of various types of devices, including, but not limited to, a personal computer system, desktop computer, laptop, notebook, or netbook computer, mainframe computer system, handheld computer, workstation, network computer, a camera, a set top box, a mobile device, a consumer device, video game console, handheld video game device, application server, storage device, a peripheral device such as a switch, modem, router, or in general any type of computing or electronic device.

In various embodiments, computer system 600 may be a uniprocessor system including one processor 610, or a multiprocessor system including several processors 610 (e.g., two, four, eight, or another suitable number). Processors 610 may be any suitable processor capable of executing instructions. For example, in various embodiments processors 610 may be general-purpose or embedded processors implementing any of a variety of instruction set architectures (ISAs), such as the x96, PowerPC, SPARC, or MIPS ISAs, or any other suitable ISA. In multiprocessor systems, each of processors 610 may commonly, but not necessarily, implement the same ISA.

System memory 620 may be configured to store program instructions 622 and/or data 632 accessible by processor 610. In various embodiments, system memory 620 may be implemented using any suitable memory technology, such as static random access memory (SRAM), synchronous dynamic RAM (SDRAM), nonvolatile/flash-type memory, persistent storage (magnetic or solid state), or any other type of memory. In the illustrated embodiment, program instructions and data implementing any of the elements of the embodiments described above may be stored within system memory 620. In other embodiments, program instructions and/or data may be received, sent or stored upon different types of computer-accessible media or on similar media separate from system memory 620 or computer system 600.

In one embodiment, I/O interface 630 may be configured to coordinate I/O traffic between processor 610, system memory 620, and any peripheral devices in the system, including network interface 640 or other peripheral interfaces, such as input/output devices 650. In some embodiments, I/O interface 630 may perform any necessary protocol, timing or other data transformations to convert data signals from one component (e.g., system memory 620) into a format suitable for use by another component (e.g., processor 610). In some embodiments, I/O interface 630 may include support for devices attached through various types of peripheral buses, such as a variant of the Peripheral Component Interconnect (PCI) bus standard or the Universal Serial Bus (USB) standard, for example. In some embodiments, the function of I/O interface 630 may be split into two or more separate components, such as a north bridge and a south bridge, for example. Also, in some embodiments some or all of the functionality of I/O interface 630, such as an interface to system memory 620, may be incorporated directly into processor 610.

Network interface 640 may be configured to allow data to be exchanged between computer system 600 and other devices attached to a network (e.g., network 690), such as one or more external systems or between nodes of computer system 600. In various embodiments, network 690 may include one or more networks including but not limited to Local Area Networks (LANs) (e.g., an Ethernet or corporate network), Wide Area Networks (WANs) (e.g., the Internet), wireless data networks, some other electronic data network, or some combination thereof. In various embodiments, network interface 640 may support communication via wired or wireless general data networks, such as any suitable type of Ethernet network, for example; via telecommunications/telephony networks such as analog voice networks or digital fiber communications networks; via storage area networks such as Fibre Channel SANs, or via any other suitable type of network and/or protocol.

Input/output devices 650 may, in some embodiments, include one or more display terminals, keyboards, keypads, touch pads, scanning devices, voice or optical recognition devices, or any other devices suitable for entering or accessing data by one or more computer systems 600. Multiple input/output devices 660 may be present in computer system 600 or may be distributed on various nodes of computer system 600. In some embodiments, similar input/output devices may be separate from computer system 600 and may interact with one or more nodes of computer system 600 through a wired or wireless connection, such as over network interface 640.

Those skilled in the art will appreciate that computer system 600 is merely illustrative and is not intended to limit the scope of embodiments. In particular, the computer system and devices may include any combination of hardware or software that can perform the indicated functions of various embodiments, including computers, network devices, Internet appliances, PDAs, wireless phones, pagers, etc. Computer system 600 may also be connected to other devices that are not illustrated, or instead may operate as a stand-alone system. In addition, the functionality provided by the illustrated components may in some embodiments be combined in fewer components or distributed in additional components. Similarly, in some embodiments, the functionality of some of the illustrated components may not be provided and/or other additional functionality may be available.

Those skilled in the art will also appreciate that, while various items are illustrated as being stored in memory or on storage while being used, these items or portions of them may be transferred between memory and other storage devices for purposes of memory management and data integrity. Alternatively, in other embodiments some or all of the software components may execute in memory on another device and communicate with the illustrated computer system via inter-computer communication. Some or all of the system components or data structures may also be stored (e.g., as instructions or structured data) on a computer-accessible medium or a portable article to be read by an appropriate drive, various examples of which are described above. In some embodiments, instructions stored on a computer-accessible medium separate from computer system 600 may be transmitted to computer system 600 via transmission media or signals such as electrical, electromagnetic, or digital signals, conveyed via a communication medium such as a network and/or a wireless link. Various embodiments may further include receiving, sending or storing instructions and/or data implemented in accordance with the foregoing description upon a computer-accessible medium or via a communication medium. In general, a computer-accessible medium may include a storage medium or memory medium such as magnetic or optical media, e.g., disk or DVD/CD-ROM, volatile or non-volatile media such as RAM (e.g., SDRAM, DDR, RDRAM, SRAM, etc.), ROM, etc.

The methods and processes described herein may be implemented in software, hardware, or a combination thereof, in different embodiments. In addition, the order of methods can be changed, and various elements can be added, reordered, combined, omitted or otherwise modified. All examples described herein are presented in a non-limiting manner. Various modifications and changes can be made as would be obvious to a person skilled in the art having benefit of this disclosure. Realizations in accordance with embodiments have been described in the context of particular embodiments. These embodiments are meant to be illustrative and not limiting. Many variations, modifications, additions, and improvements are possible. Accordingly, plural instances can be provided for components described herein as a single instance. Boundaries between various components, operations and data stores are somewhat arbitrary, and particular operations are illustrated in the context of specific illustrative configurations. Other allocations of functionality are envisioned and can fall within the scope of claims that follow. Structures and functionality presented as discrete components in the example configurations can be implemented as a combined structure or component. These and other variations, modifications, additions, and improvements can fall within the scope of embodiments.

In the foregoing description, numerous specific details, examples, and scenarios are set forth in order to provide a more thorough understanding of the present disclosure. It will be appreciated, however, that embodiments of the disclosure can be practiced without such specific details. Further, such examples and scenarios are provided for illustration, and are not intended to limit the disclosure in any way. Those of ordinary skill in the art, with the included descriptions, should be able to implement appropriate functionality without undue experimentation.

References in the specification to "an embodiment," etc., indicate that the embodiment described can include a particular feature, structure, or characteristic, but every embodiment may not necessarily include the particular feature, structure, or characteristic. Such phrases are not necessarily referring to the same embodiment. Further, when a particular feature, structure, or characteristic is described in connection with an embodiment, it is believed to be within the knowledge of one skilled in the art to affect such feature, structure, or characteristic in connection with other embodiments whether or not explicitly indicated.

Embodiments in accordance with the disclosure can be implemented in hardware, firmware, software, or any combination thereof. Embodiments can also be implemented as instructions stored using one or more machine-readable media, which may be read and executed by one or more processors. A machine-readable medium can include any mechanism for storing or transmitting information in a form readable by a machine (e.g., a computing device or a "virtual machine" running on one or more computing devices). For example, a machine-readable medium can include any suitable form of volatile or non-volatile memory.

In addition, the various operations, processes, and methods disclosed herein can be embodied in a machine-readable medium and/or a machine accessible medium/storage device compatible with a data processing system (e.g., a computer system), and can be performed in any order (e.g., including using means for achieving the various operations). Accordingly, the specification and drawings are to be regarded in an illustrative rather than a restrictive sense. In some embodiments, the machine-readable medium can be a non-transitory form of machine-readable medium/storage device.

Modules, data structures, and the like defined herein are defined as such for ease of discussion and are not intended to imply that any specific implementation details are required. For example, any of the described modules and/or data structures can be combined or divided into sub-modules, sub-processes or other units of computer code or data as can be required by a particular design or implementation.

In the drawings, specific arrangements or orderings of schematic elements can be shown for ease of description. However, the specific ordering or arrangement of such elements is not meant to imply that a particular order or sequence of processing, or separation of processes, is required in all embodiments. In general, schematic elements used to represent instruction blocks or modules can be implemented using any suitable form of machine-readable instruction, and each such instruction can be implemented using any suitable programming language, library, application-programming interface (API), and/or other software development tools or frameworks. Similarly, schematic elements used to represent data or information can be implemented using any suitable electronic arrangement or data structure. Further, some connections, relationships or associations between elements can be simplified or not shown in the drawings so as not to obscure the disclosure.

While the foregoing is directed to embodiments of the present principles, other and further embodiments of the invention may be devised without departing from the basic scope thereof, and the scope thereof is determined by the claims that follow.

## Claims

1. A method (500), performed by an apparatus, for rate control of a multi-quality data stream using multiple, combined probing techniques, comprising:
receiving (502) a multi-quality data stream;
adding (504) padding packets to the multi-quality data stream to determine which data stream of the multi-quality data stream to select to communicate data packets of the multi-quality data stream;
adding (506) probing packets to the selected data stream of the multi-quality data stream to determine a bandwidth at which to communicate the selected data stream; and
communicating (508) the selected data stream to receivers using the determined bandwidth.

2. The method of claim 1, further comprising:
determining (503), using feedback information from a communication network, whether or not a different quality data stream of the multi-quality data stream should be selected before adding padding packets to the multi-quality data stream.

3. The method of claim 1, further comprising:
determining (505), using feedback information from a communication network, if a bandwidth estimation process should be performed before adding probing packets to the selected data stream of the multi-quality data.

4. The method of claim 2 or claim 3, wherein the feedback information from the communication network comprises Real-Time Transport Protocol, RTP, data received from at least one of a sender or a receiver of the multi-quality data stream.

5. The method of claim 1, further comprising:
performing a sanity check of the selected data stream before communicating the selected data stream to receivers using the determined bandwidth.

6. The method of claim 1, further comprising:
condensing the probing packets added to the selected data stream of the multi-quality data stream with probing packets previously scheduled to be added to the selected data stream into a single burst before communicating the selected data stream to receivers.

7. The method of claim 1, wherein a last padding packet has to be added to the multi-quality data stream before a probing packet can be added.

8. An apparatus for rate control of a multi-quality data stream using multiple, combined probing techniques, comprising:
a forwarding engine (102) configured to:
receive a multi-quality data stream;
a padding adder module (104) configure to:
add padding packets to the multi-quality data stream to determine which data stream of the multi-quality data stream to select to communicate data packets of the multi-quality data stream;
a probing manager module (106) configured to:
add probing packets to the selected data stream of the multi-quality data stream to determine a bandwidth at which to communicate the selected data stream; and
a sending engine (108) configured to:
communicate the selected data stream to receivers using the determined bandwidth.

9. The apparatus of claim 8, further comprising a rate control module (110) and wherein the padding adder module is further configure to:
determine, using feedback information from the rate control module, whether or not a different quality data stream of the multi-quality data stream should be selected before adding padding packets to the multi-quality data stream.

10. The apparatus of claim 8, further comprising a rate control module (110) and wherein the probing manager module is further configure to:
determine, using feedback information from the rate control module, if a bandwidth estimation process should be performed before adding probing packets to the selected data stream of the multi-quality data.

11. The apparatus of claim 9 or claim 10, wherein the feedback information from the rate control module comprises Real-Time Transport Protocol, RTP, data received from at least one of a sender or a receiver of the multi-quality data stream.

12. The apparatus of claim 8, wherein the forwarding engine is further configured to:
perform a sanity check of the selected data stream having the added probing packets before communicating the selected data stream to receivers using the determined bandwidth.

13. The apparatus of claim 8, wherein the probing manager module is further configure to:
condense the probing packets added to the selected data stream of the multi-quality data stream with probing packets previously scheduled to be added to the selected data stream into a single burst before the selected data stream is communicated to receivers.

14. The apparatus of claim 8, wherein a last padding packet has to be added to the multi-quality data stream before a probing packet can be added.

## Patentansprüche

1. Verfahren (500), das durch eine Vorrichtung zur Ratensteuerung eines Multiqualitäts-Datenstroms unter Verwenden zahlreicher kombinierter Prüftechniken durchgeführt wird, umfassend:
Empfangen (502) eines Multiqualitäts-Datenstroms;
Hinzufügen (504) von Füllpaketen zu dem Multiqualitäts-Datenstrom zum Bestimmen, welcher Datenstrom des Multiqualitäts-Datenstroms zum Übermitteln von Datenpaketen des Multiqualitäts-Datenstroms auszuwählen ist;
Hinzufügen (506) von Prüfpaketen zu dem ausgewählten Datenstrom des Multiqualitäts-Datenstroms zum Bestimmen einer Bandbreite, in der der ausgewählte Datenstrom zu übermitteln ist; und
Übermitteln (508) des ausgewählten Datenstroms an Empfänger unter Verwenden der bestimmten Bandbreite.

2. Verfahren nach Anspruch 1, weiterhin umfassend:
unter Verwenden von Rückmeldungs-Informationen von einem Übermittlungsnetzwerk Bestimmen (503), ob ein unterschiedlicher QualitätsDatenstrom des Multiqualitäts-Datenstroms vor dem Hinzufügen von Füllpaketen zu dem Multiqualitäts-Datenstrom ausgewählt werden soll.

3. Verfahren nach Anspruch 1, weiterhin umfassend:
unter Verwenden von Rückmeldungs-Informationen von einem Übermittlungsnetzwerk Bestimmen (505), ob ein Bandbreiten-Schätzverfahren vor dem Hinzufügen von Prüfpaketen zu dem ausgewählten Datenstrom der Multiqualitäts-Daten durchgeführt werden soll.

4. Verfahren nach Anspruch 2 oder Anspruch 3, wobei die Rückmeldungs-Informationen von dem Übermittlungsnetzwerk Real-Time-Transport-Protokolldaten, RTP-Daten, umfasst, die von wenigstens einem eines Senders oder eines Empfängers des Multiqualitäts-Datenstroms empfangen werden.

5. Verfahren nach Anspruch 1, umfassend:
Durchführen einer Plausibilitätsprüfung des ausgewählten Datenstroms vor dem Übermitteln des ausgewählten Datenstroms an Empfänger unter Verwenden der bestimmten Bandbreite.

6. Verfahren nach Anspruch 1, weiterhin umfassend:
Komprimieren der Prüfpakete, die zu dem ausgewählten Datenstrom des Multiqualitäts-Datenstroms hinzugefügt wurden, mit Prüfpaketen, die zuvor dazu vorgesehen waren, zu dem ausgewählten Datenstrom in einen Single-Burst hinzugefügt zu werden, bevor der ausgewählte Datenstrom an Empfänger übermittelt wird.

7. Verfahren nach Anspruch 1, wobei ein letztes Füllpaket zu dem Multiqualitäts-Datenstrom hinzuzufügen ist, bevor ein Prüfpaket hinzugefügt werden kann.

8. Vorrichtung zur Ratensteuerung eines Multiqualitäts-Datenstroms unter Verwenden zahlreicher kombinierter Prüftechniken, umfassend:
ein Weiterleitungsmodul (102), das konfiguriert ist zum:
Empfangen eines Multiqualitäts-Datenstroms;
ein Padding-Adder-Modul (104), das konfiguriert ist zum:
Hinzufügen von Füllpaketen zum Multiqualitäts-Datenstrom zum Bestimmen, welcher Datenstrom des Multiqualitäts-Datenstroms auszuwählen ist, um Datenpakete des Multiqualitäts-Datenstroms zu übermitteln;
ein Prüfmanager-Modul (106), das konfiguriert ist zum:
Hinzufügen von Prüfpaketen zu dem ausgewählten Datenstrom des Multiqualitäts-Datenstroms zum Bestimmen einer Bandbreite, in der der ausgewählte Datenstrom zu übermitteln ist; und
ein Versandmodul (108), das konfiguriert ist zum:
Übermitteln des ausgewählten Datenstroms an Empfänger unter Verwenden der bestimmten Bandbreite.

9. Vorrichtung nach Anspruch 8, weiterhin umfassend ein Ratensteuerungs-Modul (110) und wobei das Padding-Adder-Modul weiterhin konfiguriert ist zum:
Bestimmen unter Verwenden von Rückmeldungsinformationen von dem Ratensteuerungs-Modul, ob ein unterschiedlicher Qualitätsdatenstrom des Multiqualitäts-Datenstroms ausgewählt werden soll, bevor Füllpakte zu dem Multiqualitäts-Datenstrom hinzugefügt sind.

10. Vorrichtung nach Anspruch 8, weiterhin umfassend ein Ratensteuerungs-Modul (110) und wobei das Prüfmanager-Modul weiterhin konfiguriert ist zum:
Bestimmen unter Verwenden von Rückmeldungsinformationen von dem Ratensteuerungs-Modul, ob ein Bandbreiten-Schätzprozess durchgeführt werden soll, bevor Prüfpakete zu dem ausgewählten Datenstrom der Multi-Qualitätsdaten hinzugefügt sind.

11. Vorrichtung nach Anspruch 9 oder Anspruch 10, wobei die Rückmeldungsinformationen von dem Ratensteuerungs-Modul Real-Time-Transport-Protokoll-Daten, RTP-Daten, umfasst, die von wenigstens einem eines Senders oder eines Empfängers des Multiqualitäts-Datenstroms empfangen sind.

12. Vorrichtung nach Anspruch 8, wobei das Weiterleitungsmodul weiterhin konfiguriert ist zum:
Durchführen einer Plausibilitätsprüfung des ausgewählten Datenstroms mit den hinzugefügten Prüfpaketen vor dem Übermitteln des ausgewählten Datenstroms an Empfänger unter Verwenden der bestimmten Bandbreite.

13. Vorrichtung nach Anspruch 8, wobei das Prüfmanager-Modul weiterhin konfiguriert ist zum:
Komprimieren der Prüfpakete, die zu dem ausgewählten Datenstrom des Multiqualitäts-Datenstroms hinzugefügt sind, mit Prüfpaketen, die zuvor dazu bestimmt waren, zu dem ausgewählten Datenstrom in einen Single-Burst hinzugefügt zu sein, bevor der ausgewählte Datenstrom an Empfänger übermittelt wird.

14. Vorrichtung nach Anspruch 8, wobei ein letztes Füllpaket zu dem Multiqualitäts-Datenstrom hinzuzufügen ist, bevor ein Prüfpaket hinzugefügt sein kann.

## Revendications

1. Procédé (500) mis en œuvre par un appareil, pour la régulation du débit d'un flux de données à qualités multiples au moyen de plusieurs techniques de sondage combinées, comprenant :
la réception (502) d'un flux de données à qualités multiples ;
l'ajout (504) de paquets de remplissage au flux de données à qualités multiples pour déterminer quel flux de données parmi les flux de données à qualités multiples devrait être sélectionné pour communiquer des paquets de données du flux de données à qualités multiples ;
l'ajout (506) de paquets de sondage au flux de données sélectionné du flux de données à qualités multiples pour déterminer une bande passante à laquelle communiquer le flux de données sélectionné ; et
la communication (508) du flux de données sélectionné à des récepteurs en utilisant la bande passante déterminée.

2. Procédé selon la revendication 1, comprenant en outre :
la détermination (503), à l'aide d'informations en retour provenant d'un réseau de communication, si ou non un flux de données de qualité différente au sein du flux de données à qualités multiples devrait être sélectionné avant d'ajouter des paquets de remplissage au flux de données à qualités multiples.

3. Procédé selon la revendication 1, comprenant en outre :
la détermination (505), à l'aide d'informations en retour provenant d'un réseau de communication, si un processus d'estimation de bande passante devrait être exécuté avant d'ajouter des paquets de sondage au flux de données sélectionné du flux de données à qualités multiples.

4. Procédé selon la revendication 2 ou la revendication 3, dans lequel les informations en retour provenant du réseau de communication comprennent des données de protocole de transport en temps réel, RTP, reçues d'au moins un émetteur ou un récepteur du flux de données à qualités multiples.

5. Procédé selon la revendication 1, comprenant en outre :
l'exécution d'une vérification de cohérence du flux de données sélectionné avant de communiquer le flux de données sélectionné à des récepteurs en utilisant la bande passante déterminée.

6. Procédé selon la revendication 1, comprenant en outre :
la condensation des paquets de sondage ajoutés au flux de données sélectionné du flux de données à qualités multiples avec des paquets de sondage dont l'ajout au flux de données sélectionné était précédemment programmé, en une rafale unique avant de communiquer le flux de données sélectionné à des récepteurs.

7. Procédé selon la revendication 1, dans lequel un dernier paquet de remplissage doit être ajouté au flux de données à qualités multiples avant qu'un paquet de sondage puisse être ajouté.

8. Dispositif de régulation de débit d'un flux de données à qualités multiples utilisant de multiples techniques de sondage combinées, comprenant :
un moteur d'acheminement (102) configuré pour :
recevoir un flux de données à qualités multiples ;
un module d'ajout de paquets de remplissage (104) configuré pour :
ajouter des paquets de remplissage au flux de données à qualités multiples afin de déterminer quel flux de données, parmi les flux du flux de données à qualités multiples, devrait être sélectionné pour communiquer des paquets de données du flux de données à qualités multiples ;
un module de gestion de sondage (106) configuré pour :
ajouter des paquets de sondage au flux de données sélectionné du flux de données à qualités multiples afin de déterminer une bande passante à laquelle communiquer le flux de données sélectionné ; et
un moteur d'envoi (108) configuré pour :
communiquer le flux de données sélectionné à des récepteurs en utilisant la bande passante déterminée.

9. Dispositif selon la revendication 8, comprenant en outre un module de régulation de débit (110) et dans lequel le module d'ajout de paquets de remplissage est en outre configuré pour :
déterminer, à l'aide d'informations en retour provenant du module de régulation de débit, si ou non un flux de données de qualité différente, parmi les flux de données à qualités multiples, devrait être sélectionné avant d'ajouter des paquets de remplissage au flux de données à qualités multiples.

10. Dispositif selon la revendication 8, comprenant en outre un module de régulation de débit (110) et dans lequel le module de gestion de sondage est en outre configuré pour :
déterminer, à l'aide d'informations en retour provenant du module de régulation de débit, si un processus d'estimation de bande devrait être exécuté avant d'ajouter des paquets de sondage au flux de données sélectionné du flux de données à qualités multiples.

11. Dispositif selon la revendication 9 ou la revendication 10, dans lequel les informations en retour provenant du module de régulation de débit comprennent des données de protocole de transport en temps réel RTP, reçues d'au moins un émetteur ou un récepteur du flux de données à qualités multiples.

12. Dispositif selon la revendication 8, dans lequel le moteur de transfert est en outre configuré pour :
effectuer une vérification de cohérence du flux de données sélectionné comportant les paquets de sondage ajoutés, avant de communiquer le flux de données sélectionné à des récepteurs en utilisant la bande passante déterminée.

13. Dispositif selon la revendication 8, dans lequel le module de gestion de sondage est en outre configuré pour :
condenser les paquets de sondage ajoutés au flux de données sélectionné du flux de données à qualités multiples avec des paquets de sondage dont l'ajout au flux de données sélectionné était précédemment programmé, en une rafale unique avant de communiquer le flux de données sélectionné à des récepteurs.

14. Dispositif selon la revendication 8, dans lequel un dernier paquet de remplissage doit être ajouté au flux de données à qualités multiples avant qu'un paquet de sondage puisse être ajouté.
